# FASCICULE DE BREVET EUROPEEN

(11) **EP 2 812 244 B1**
(45) Date de publication et mention de la délivrance du brevet: **10.01.2018**
(21) Numéro de dépôt: 13703054.0
(22) Date de dépôt: 06.02.2013
(51) Int. Cl.: B64C 25/50, F16J 1/00, F16J 1/01, F16J 1/16

(54) **PISTON POUR COMMANDE D'ORIENTATION À CRÉMAILLÈRE**
STEUERKOLBEN FÜR EINE ZAHNSTANGENLENKUNG
RACK STEERING CONTROL PISTON

(30) Priorité: 08.02.2012 FR 1251190
(43) Date de publication de la demande: 17.12.2014
(73) Titulaire: Safran Landing Systems, 78140 Vélizy-Villacoublay (FR)
(72) Inventeur: FARCY, Marc, F-78140 Velizy Villacoublay (FR)
(74) Mandataire: Parzy, Benjamin Alain
(86) Numéro de dépôt international: PCT/EP2013/052357
(87) Numéro de publication internationale: WO 2013/117607

(56) Documents cités:
- DE-A1- 3 506 069
- US-A- 1 701 355
- US-A- 2 779 644
- US-A- 3 444 784
- US-A1- 2007 199 442

## Description

L'invention est relative à un piston d'actionneur d'orientation pour atterrisseur d'aéronef.

### ARRIERE PLAN DE L'INVENTION

On connaît des atterrisseurs comportant une partie inférieure orientable. Cette partie inférieure comprend généralement une tige montée coulissante dans un caisson de l'atterrisseur à l'encontre d'un effort de suspension, la tige portant à son extrémité inférieure un essieu qui reçoit une ou plusieurs roues. Certains de ces atterrisseurs portent un collier ou un manchon monté tournant sur le caisson de l'atterrisseur en étant relié à la partie inférieure orientable par un compas. Le collier ou le manchon est muni d'une couronne dentée qui coopère avec la crémaillère d'un actionneur d'orientation pour commander un pivotement de la partie inférieure orientable. A titre d'exemple, on citera l'atterrisseur auxiliaire de l'AIRBUS A320 qui est muni d'un tel actionnement à crémaillère.

La crémaillère est attelée à ses deux extrémités à des pistons qui sont montés coulissants à étanchéité dans des cylindres s'étendant de part et d'autre de l'atterrisseur pour y définir deux chambres d'un actionneur hydraulique.

Souvent, de tels pistons sont réalisés entièrement en bronze, pour des questions de simplicité. Cependant, une telle réalisation s'avère lourde. En outre, si en production le diamètre externe du piston n'est pas conforme aux spécifications, c'est l'ensemble du piston qui est mis au rebut. De même, si en service, le piston s'use au point de ne plus rentrer les spécifications de dimension, l'ensemble du piston doit être mis au rebut pour être remplacé par un piston neuf.

L'art antérieur est notamment illustré par le document US 2779644.

### OBJET DE L'INVENTION

L'invention a pour objet de proposer un piston pour actionneur d'orientation à crémaillère plus léger.

### RESUME DE L'INVENTION

En vue de la réalisation de ce but, on propose un piston pour actionneur d'orientation à crémaillère pour atterrisseur d'aéronef selon la revendication 1. Ainsi, l'essentiel du piston, à savoir le corps, est en alliage léger beaucoup plus léger que le bronze. Un défaut de production ou d'usure en service affectant la douille conduit à la mise au rebut de la douille, ce qui représente une quantité de bronze bien moins importante que les pistons réalisés intégralement en bronze.

Par bronze, on entend tout type d'alliage contenant majoritairement du cuivre et de l'étain. De préférence cependant, on retiendra l'alliage défini par la norme AMS4690.

Par alliage léger, on entend tout type d'alliage contenant majoritairement de l'aluminium, notamment les alliages légers couramment utilisés en aéronautique, tels le 2024, ou encore les alliages au Zinc de la série 7000.

### BREVE DESCRIPTION DES FIGURES

L'invention sera mieux comprise à la lecture de la description qui suit d'un mode particulier de réalisation non limitatif, en référence aux figures des dessins annexés parmi lesquelles :
- la figure 1 est une vue en coupe partielle d'une jambe d'atterrisseur munie d'un actionneur d'orientation à crémaillère équipée de pistons selon l'invention ;
- la figure 2 est une vue en coupe agrandie du piston de la figure 1.

### DESCRIPTION DETAILLEE DE L'INVENTION

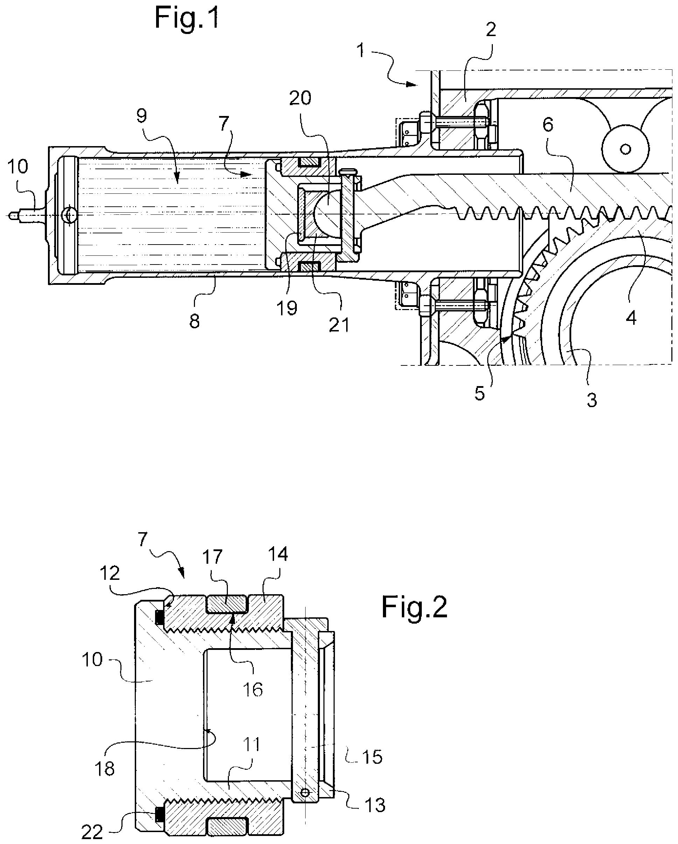

En référence à la figure 1, l'invention s'applique à la commande d'orientation d'un atterrisseur 1 dont on voit ici le caisson 2 en coupe. De façon connue en soi, une tige 3 comportant à son extrémité inférieure un essieu pour porter une ou des roues est montée coulissante à l'intérieur du caisson 2. La tige est reliée par un compas (non visible ici) à un manchon 4 qui s'étend ici à l'intérieur du caisson 2, autour de la tige 3. Le manchon 4 comporte une couronne dentée 5 qui coopère avec une crémaillère 6. Le déplacement de la crémaillère 6 dans un sens ou dans l'autre provoque la rotation du manchon 4, qui entraîne la rotation de la tige 3, ce qui provoque donc l'orientation de la ou des roues portées par la tige 3, l'ensemble constituant une partie orientable de l'atterrisseur.

A cet effet, les extrémités de la crémaillère 6 sont chacune attelées à un piston 7 qui est monté à coulissement étanche dans un cylindre 8 pour y définir une chambre hydraulique 9. Un port hydraulique 10 permet d'injecter dans la chambre 9 ou récupérer en provenance de cette chambre un flux de fluide hydraulique.

Sur la figure 1, on ne voit que l'un des cylindres 8 porté par le caisson 2. Il est bien évident que le caisson 2 porte un autre cylindre identique, pour recevoir un autre piton 7 attelé à l'autre extrémité de la crémaillère. Les deux chambres hydrauliques 9 ainsi constituées définissent un actionneur hydraulique double effet permettant de déplacer la crémaillère dans un sens ou dans l'autre.

Tout ceci est bien connu et n'est rappelé qu'à titre d'illustration.

En référence à la figure 2, et conformément à l'invention, le piston 7 comporte un corps 10 en alliage léger ayant une partie courante 11 cylindrique et extérieurement filetée. La partie courante 11 est terminée d'un côté par un épaulement 12 et de l'autre côté par une jupe 13 qui prolonge la partie courante 11. Une douille en bronze 14 est vissée sur la partie courante 11. Le diamètre extérieur de la douille en bronze 14 est ajusté avec un léger jeu au diamètre intérieur du cylindre 8. La douille en bronze 14 comporte une gorge 16 pour recevoir un joint d'étanchéité 17 qui assure l'étanchéité de la chambre 9. La douille en bronze 14 est arrêtée axialement entre l'épaulement 12 et une broche 15 engagée dans un perçage transversal de la jupe et qui traverse la jupe 13 pour atteler l'une des extrémités de la crémaillère 6 au piston 7. A cet égard, on remarque à la figure 1 que l'extrémité 20 de la crémaillère 6 est configurée en demi-sphère qui prend appui sur un patin 21 conforme, qui est lui-même en appui sur un fond 18 du corps 10 par l'intermédiaire d'un coussinet 19. Ainsi, lorsque la pression est appliquée dans la chambre 9, l'effort résultant est transmis à la crémaillère par poussée sur son extrémité sphérique, sans solliciter la broche 15.

Pour parfaire l'étanchéité de l'ensemble, un joint 22 est logé dans une gorge réalisée dans la face dressée de l'épaulement 12 pour venir en appui contre la douille en bronze 14, afin d'empêcher tout passage de fluide par le filetage de la partie courante 11.

Le piston ainsi réalisé est bien plus léger qu'un piston intégralement réalisé en bronze. Par ailleurs, en cas de non-conformité de la douille 14, il suffit de changer cette dernière, sans remplacer l'ensemble du piston.

## Revendications

1. Piston (7) pour actionneur d'orientation à crémaillère (6) pour atterrisseur d'aéronef (1) comportant un corps (10) muni d'une jupe (13) et recevant une douille (14) en bronze munie d'une gorge (16) de réception d'un joint d'étanchéité (17), **caractérisé en ce que**
- le corps (10) est en alliage léger, et la jupe (13) présente un perçage pour recevoir une broche (15) de solidarisation du piston à la crémaillère ;
- la douille (14) est taraudée et le corps (10) a une partie courante (11) extérieurement filetée, terminée d'un coté par un épaulement, pour recevoir la douille (14) à vissage de sorte qu'elle s'étende en service entre un épaulement (12) du corps (10) et la broche (15) pour être arrêtée axialement entre l'épaulement (12) et la broche (15).

2. Piston selon la revendication 1, dans lequel une gorge est ménagée dans une face dressée de l'épaulement en regard de la douille pour recevoir un joint d'étanchéité (22) qui vient en appui contre la douille lorsque celle-ci est vissée sur le corps.

3. Piston selon la revendication 1, comportant un patin (21) en appui sur un fond (18) du corps (1) pour coopérer avec une extrémité hémisphérique de la crémaillère de sorte qu'une pression appliquée sur le piston génère un effort qui est transmis à la crémaillère par poussée sur son extrémité sphérique, sans solliciter la broche (15).

4. Atterrisseur d'aéronef comportant une partie orientable (3) ainsi qu'un actionneur d'orientation à crémaillère pour orienter la partie orientable (3), l'actionneur comportant une crémaillère engrenant avec une couronne dentée (5) associée en rotation à la partie inférieure orientable, la crémaillère étant sélectivement poussée d'un côté ou de l'autre au moyen de pistons (7) attelés à la crémaillère et coulissant à étanchéité dans des cylindres respectifs (8), **caractérisé en ce que** le piston comporte un corps (10) en alliage léger ayant une partie courante (11) extérieurement filetée terminée d'un côté par un épaulement (12) et prolongée de l'autre côté par une jupe (13), le corps recevant à vissage une douille en bronze taraudée présentant sur sa paroi externe au moins une gorge de réception d'un joint d'étanchéité, la jupe présentant un perçage pour recevoir une broche de solidarisation du piston à la crémaillère la douille s'étendant en service entre l'épaulement et la broche pour être arrêtée axialement entre l'épaulement et la broche.

## Patentansprüche

1. Kolben (7) für einen Lenkaktor mit Zahnstange (6) für ein Luftfahrzeugfahrwerk (1), umfassend einen Körper (10), der mit einer Schürze (13) versehen ist und eine Bronzehülse (14) aufnimmt, die mit einer Nut (16) zur Aufnahme einer Dichtung (17) versehen ist, **dadurch gekennzeichnet, dass**
- der Körper (10) aus einer Leichtmetalllegierung ist und die Schürze (13) eine Bohrung aufweist, um einen Stift (15) zur Befestigung des Kolbens an der Zahnstange aufzunehmen;
- wobei die Hülse (14) mit einem Innengewinde versehen ist und der Körper (10) einen außen mit einem Gewinde versehenen laufenden Abschnitt (11) hat, der auf einer Seite mit einer Schulter abschließt, um die Schraubhülse (14) aufzunehmen, so dass sie sich im Gebrauch zwischen der Schulter (12) des Körpers (10) und dem Stift (15) erstreckt, um axial zwischen der Schulter (12) und dem Stift (15) arretiert zu sein.

2. Kolben nach Anspruch 1, bei dem eine Nut in einer gerichteten Fläche der Schulter gegenüber der Hülse ausgebildet ist, um eine Dichtung (22) aufzunehmen, die an der Hülse anliegen wird, wenn diese auf den Körper geschraubt ist.

3. Kolben nach Anspruch 1, umfassend einen Schuh (21) in Anlage an einem Boden (18) des Körpers (1), um mit einem halbkugelförmigen Ende der Zahnstange zusammenzuwirken, so dass ein auf den Kolben ausgeübter Druck eine Kraft erzeugt, die durch einen Schub auf ihr kugelförmiges Ende auf die Zahnstange übertragen wird, ohne den Stift (15) zu beanspruchen.

4. Luftfahrzeugfahrwerk, umfassend einen lenkbaren Teil (3) sowie einen Lenkaktor mit Zahnstange, um den lenkbaren Teil (3) zu lenken, wobei der Aktor eine Zahnstange umfasst, die mit einem Zahnkranz (5) in Eingriff kommt, der drehend mit dem lenkbaren unteren Teil verbunden ist, wobei die Zahnstange selektiv auf der einen Seite oder der anderen mittels Kolben (7) geschoben wird, die an der Zahnstange befestigt sind und auf dichte Weise in entsprechenden Zylindern (8) gleiten, **dadurch gekennzeichnet, dass** der Kolben einen Körper (10) aus einer Leichtmetalllegierung umfasst, der einen außen mit einem Gewinde versehenen laufenden Abschnitt (11) hat, der auf einer Seite mit einer Schulter (12) abschließt und auf der anderen Seite durch eine Schürze (13) verlängert ist, wobei der Körper durch Verschrauben eine mit einem Innengewinde versehene Bronzehülse aufnimmt, die auf ihrer Außenwand mindestens eine Nut zur Aufnahme einer Dichtung aufweist, wobei die Schürze eine Bohrung aufweist, um einen Stift zur Befestigung des Kolbens an der Zahnstange aufzunehmen, wobei sich die Hülse im Gebrauch zwischen der Schulter und dem Stift erstreckt, um axial zwischen der Schulter und dem Stift arretiert zu sein.

## Claims

1. A piston of steering actuator with a rack (6) for an aircraft landing gear (1), comprising a body (10) provided with a skirt (13) and receiving a bronze bushing (14) having a groove (16) for receiving a seal (17), **characterized in that**
- the body (10) is made of lightweight alloy, and the skirt (13) has a drilling to receive a pin (15) for securing the piston to the rack,
- the bushing (14) is tapped and the body (10) has an externally threaded main span (11) terminated on one side by a shoulder for having screwed to it the bushing (14) so that said bushing extends in service between the shoulder (12) of the body (10) and the pin (15) so that it is retained axially between the shoulder (12) and the pin (15).

2. The piston as claimed in claim 1, in which a groove is formed in an upright face of the shoulder facing the bushing in order to receive a seal (22) which bears against the bushing when the latter is screwed onto the body.

3. The piston as claimed in claim 1, comprising a shoe (21) bearing on a bottom (18) of the body (1) in order to cooperate with a hemispherical end of the rack such that a pressure applied to the piston generates a force which is transmitted to the rack by thrust on its spherical end, without stressing the pin (15).

4. An aircraft landing gear comprising a steerable part (3) and also a rack steering actuator for steering the steerable part (3), the actuator comprising a rack engaging with a toothed ring (5) coupled in rotation with the steerable lower part, the rack being selectively pushed on one or the other side by means of pistons (7) attached to the rack and sliding with sealing in respective cylinders (8), **characterized in that** the piston comprises a body (10) made of lightweight alloy having an externally threaded main span (11) terminated on one side by a shoulder (12) and extended on the other side by a skirt (13), the body having screwed to it a tapped bronze bushing having on its outer wall at least one groove for receiving a seal, the skirt having a drilling to receive a pin for securing the piston to the rack, the bushing extending in service between the shoulder and the pin so that it is retained axially between the shoulder and the pin.
